(19) Europäisches Patentamt
European Patent Office
Office européen des brevets

(11) **EP 4 119 862 A1**

(12) **EUROPEAN PATENT APPLICATION**
published in accordance with Art. 153(4) EPC

(43) Date of publication:
**18.01.2023 Bulletin 2023/03**

(21) Application number: **21796239.8**

(22) Date of filing: **28.04.2021**

(51) International Patent Classification (IPC):
*F24F 11/88* (2018.01)     *F24F 110/10* (2018.01)
*F24F 110/30* (2018.01)     *G01K 11/24* (2006.01)

(52) Cooperative Patent Classification (CPC):
**F24F 11/63; F24F 11/88; F24F 11/89; G01K 11/24;**
F24F 2110/10; F24F 2110/30

(86) International application number:
**PCT/JP2021/017020**

(87) International publication number:
**WO 2021/221117 (04.11.2021 Gazette 2021/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.04.2020 JP 2020080079**

(71) Applicant: **Daikin Industries, Ltd.
Osaka-shi, Osaka 530-0001 (JP)**

(72) Inventors:
• HIEI, Takehiko
  Osaka-shi, Osaka 530-8323 (JP)
• OKUMOTO, Mamoru
  Osaka-shi, Osaka 530-8323 (JP)
• KUROI, Kiyoshi
  Osaka-shi, Osaka 530-8323 (JP)

(74) Representative: **Goddar, Heinz J.
Boehmert & Boehmert
Anwaltspartnerschaft mbB
Pettenkoferstrasse 22
80336 München (DE)**

(54) **ENVIRONMENT DETECTION SYSTEM**

(57)     An environment detection system (1) includes: a determination unit (32) configured to determine at least either a temperature or an air velocity in a first region Ap near an environment control device (40) installed in a target space (S), based on predetermined acquired information acquired from the environment control device (40). At least either a temperature distribution or an air velocity distribution in a second region Aq of the target space (S) except the first region Ap is obtained based on at least either the temperature or the air velocity in the first region Ap determined by the determination unit (32) and measured sound wave data.

FIG.11

EP 4 119 862 A1

**Description**

TECHNICAL FIELD

The present disclosure relates to an environment detection system.

BACKGROUND ART

A method in which the temperature distribution in a space is measured by sound waves has been known in the art. Patent Document 1 discloses an environment-state measuring apparatus including a speaker that transmits sound waves into a space and a microphone that receives the sound waves transmitted by the speaker. This measuring apparatus measures the temperature distribution in a room based on the sound wave propagation time and the sound wave propagation distance from when the speaker transmits the sound wave to when the microphone receives the sound wave.

CITATION LIST

PATENT DOCUMENT

Patent Document 1: Japanese Unexamined Patent Publication No. H11-173925

SUMMARY OF THE INVENTION

TECHNICAL PROBLEM

If the temperature distribution in a space is measured using only sound waves, the error from the actual temperature distribution is relatively large. To address this problem, the environment-state measuring apparatus of Patent Document 1 actually measures the temperature of a predetermined location in the space, and corrects the value of temperature measured using sound waves, with the actually measured temperature.

This measuring apparatus requires a separate temperature sensor installed in the space. This unfortunately increases the number of components.

It is an object of the present disclosure to improve the accuracy of measurement of each of the temperature distribution and the air velocity distribution in a space conducted using sound waves.

SOLUTION TO THE PROBLEM

A first aspect of the present disclosure is directed to an environment detection system including: a sound wave transmitter (10) configured to transmit a detection sound wave to a target space (S) where an environment control device (40) configured to condition air in a space is installed; and a sound wave receiver (20) configured to receive the detection sound wave transmitted by the sound wave transmitter (10). The environment detection system obtains at least either a temperature distribution or an air velocity distribution in the target space (S), based on measured sound wave data including a length of a sound wave propagation path and a sound wave propagation time, from when the sound wave transmitter (10) transmits the detection sound wave to when the sound wave receiver (20) receives the detection sound wave. The environment detection system further includes: a determination unit (32) configured to determine at least either a temperature or an air velocity in a first region Ap near the environment control device (40), based on predetermined acquired information acquired from the environment control device (40). At least either a temperature distribution or an air velocity distribution in a second region Aq of the target space (S) except the first region Ap is obtained based on at least either the temperature or the air velocity in the first region Ap determined by the determination unit (32) and the measured sound wave data.

According to the first aspect, the target space (S) is divided into the first region near the environment control device (40) and the second region except the first region. The determination unit (32) determines at least either the temperature or the air velocity in the first region Ap, based on the acquired information. The temperature distribution and air velocity distribution in the second region Aq are calculated based on the temperature and air velocity in the first region Ap determined by the determination unit (32) and the measured sound wave data on the detection sound wave propagating through the second region Aq. As a result, the accuracies of measurement of the temperature distribution and air velocity distribution in the target space (S) can be improved as compared with the case where the temperature distribution and air velocity distribution in the second region Aq are calculated based on only the measured sound wave data.

A second aspect of the present disclosure is an embodiment of the first aspect. In the second aspect, the environment control device (40) is an air conditioner (40) having an inlet (66) through which air is sucked from the target space (S) and an outlet (67) through which air is blown into the target space (S). The acquired information is an intake temperature that is a temperature of the air sucked through the inlet (66) by the air conditioner (40). The determination unit (32) determines that the intake temperature is a temperature in the first region Ap. The temperature distribution in the second region Aq is obtained based on the temperature in the first region determined by the determination unit and the measured sound wave data.

According to the second aspect, the temperature distribution in the second region Aq is obtained based on the temperature in the first region Ap and the measured sound wave data on the second region Aq, where the intake temperature of the air conditioner (40) is the temperature in the first region Ap. This can improve the accuracy of measurement of the temperature distribution in the target space (S).

A third aspect of the present disclosure is an embodiment of the first aspect. In the third aspect, the environment control device (40) is an air conditioner (40) including:

an inlet (66) through which air is sucked from the target space (S); a heat exchanger (44) configured to regulate a temperature of the air sucked through the inlet (66); an outlet (67) through which air that has passed through the heat exchanger (44) is blown into the target space (S); a fan (52) configured to send air from the inlet (66) to the outlet (67); and a flap (72) configured to regulate a direction of air blown out of the outlet (67). The acquired information includes a temperature of the heat exchanger (44), the temperature of the air drawn through the inlet (66), a rotational speed of the fan (52), and an orientation of the flap (72). The determination unit (32) calculates a blow-out temperature that is a temperature of the air blown out of the outlet (67) of the air conditioner (40), based on the acquired information, and determines that the blow-out temperature is the temperature in the first region Ap. The temperature distribution in the second region Aq is obtained based on the temperature in the first region Ap determined by the determination unit (32) and the measured sound wave data.

According to the third aspect, the determination unit (32) determines the blow-out temperature of the air conditioner (40) to be the temperature in the first region Ap. The temperature distribution in the second region Aq is obtained based on the temperature in the first region Ap and the measured sound wave data on the second region Aq. This can improve the accuracy of measurement of the temperature distribution in the target space (S).

A fourth aspect of the present disclosure is an embodiment of the first aspect. In the fourth aspect, the environment control device (40) is an air conditioner (40) including: an inlet (66) through which air in the target space (S) is sucked; an outlet (67) through which air is blown into the target space (S); and a fan (52) configured to send air from the inlet (66) to the outlet (67). The acquired information includes a rotational speed of the fan (52) and an opening area of the inlet (66). The determination unit (32) calculates an intake air velocity that is a velocity of the air sucked into the inlet (66) of the air conditioner (40), based on the acquired information, and determines that the intake air velocity is the air velocity in the first region Ap. The air velocity distribution in the second region Aq is obtained based on the air velocity in the first region Ap determined by the determination unit (32) and the measured sound wave data.

According to the fourth aspect, the determination unit (32) determines the intake air velocity of the air conditioner (40) to be the air velocity in the first region Ap. The air velocity distribution in the second region Aq is obtained based on the air velocity in the first region Ap and the measured sound wave data on the second region Aq. This can improve the accuracy of measurement of the air velocity distribution in the target space (S).

A fifth aspect is an embodiment of the first aspect. In the fifth aspect, the environment control device (40) is an air conditioner (40) including: an inlet (66) through which air in the target space (S) is sucked; an outlet (67) through which air is sucked into the target space (S); a fan (52) configured to send air from the inlet (66) to the outlet (67); and a flap (72) configured to regulate a direction of air blown out of the outlet (67). The acquired information includes a rotational speed of the fan (52), an opening area of the inlet (67), and an orientation of the flap (72). The determination unit (32) calculates a blow-out air velocity that is a velocity of the air blown out of the outlet (67) of the air conditioner (40), based on the acquired information, and determines that the blow-out air velocity is the air velocity in the first region Ap. The air velocity distribution in the second region Aq is obtained based on the air velocity in the first region determined by the determination unit (32) and the measured sound wave data.

According to the fifth aspect, the determination unit (32) determines the blow-out air velocity of the air conditioner (40) to be the air velocity in the first region Ap. The temperature distribution in the second region Aq is obtained based on the air velocity in the first region Ap and the measured sound wave data on the second region Aq. This can improve the accuracy of measurement of the temperature distribution in the target space (S).

A sixth aspect of the present disclosure is an embodiment of any one of the first to fifth aspects. In the sixth aspect, the second region Aq is divided into a plurality of regions, and the determination unit (32) obtains the air velocity distribution in the second region, where an air velocity in some regions in contact with a wall surface, a floor surface, and a ceiling surface of the target space (S) among the plurality of regions is zero.

According to the sixth aspect, the air velocity near the wall surface, the floor surface, and the ceiling surface is equal to zero. Thus, the air velocity distribution in the second region can be obtained, where the air velocity in the some regions is zero.

A seventh aspect of the present disclosure is an embodiment of any one of the first to sixth aspects. The environment detection system of the seventh aspect further includes: a calculation unit (35) configured to obtain an air age distribution in the target space (S), based on the air velocity distribution in the second region Aq.

According to the seventh aspect, the obtained air age distribution in the target space (S) allows estimation of whether or not the entire target space (S) has been adequately ventilated.

BRIEF DESCRIPTION OF THE DRAWINGS

FIG. 1 is a perspective view of a target space including an environment detection system according to an embodiment.
FIG. 2 is a piping system diagram illustrating a refrigerant circuit of an air conditioner according to the embodiment.
FIG. 3 is a vertical sectional view of an internal structure of an indoor unit according to the embodiment.
FIG. 4 is an enlarged view of the vicinity of an outlet of the indoor unit according to the embodiment, and illustrates a state where a flap is in the closed position.
FIG. 5 is an enlarged view of the vicinity of the outlet of the indoor unit according to the embodiment, and illustrates a state where the flap is in the open position.
FIG. 6 is a block diagram illustrating a control device and devices connected to the control device via communication lines.
FIG. 7 is a block diagram illustrating a configuration of the environment detection system according to this embodiment.
FIG. 8 is a schematic diagram showing the temperature distribution in a target space and propagation paths of sound waves.
FIG. 9 illustrates a method for measuring the temperature distribution and air velocity distribution in the target space.
FIG. 10 is a flowchart showing processes of measuring the temperature distribution and air velocity distribution in the target space, performed by the environment detection system.
FIG. 11 is a flowchart showing processes of measuring the temperatures and air velocities in a second region.
FIG. 12 is a vertical sectional view of an internal structure of an indoor unit according to a variation.
FIG. 13 corresponds to FIG. 11 and illustrates an environment detection system according to the variation.
FIG. 14 corresponds to FIG. 7 and illustrates an environment detection system according to a second embodiment.
FIG. 15 is a schematic view of an example of the air velocity distribution in an indoor space.
FIG. 16 is a schematic view of an example of the air age distribution in the indoor space.

DESCRIPTION OF EMBODIMENTS

Embodiments will be described below with reference to the drawings. The following embodiments are merely exemplary ones in nature, and are not intended to limit the scope, application, or uses of the invention.

«Embodiments»

Embodiments will be described below with reference to the drawings. The embodiments below are merely exemplary ones in nature, and are not intended to limit the scope, applications, or use of the present invention. Note that the terms in the following description which indicate directions, such as "upper," "top," "lower," "bottom," "right," and "left" refer to the directions shown in the drawings unless otherwise specified.

«Embodiment»

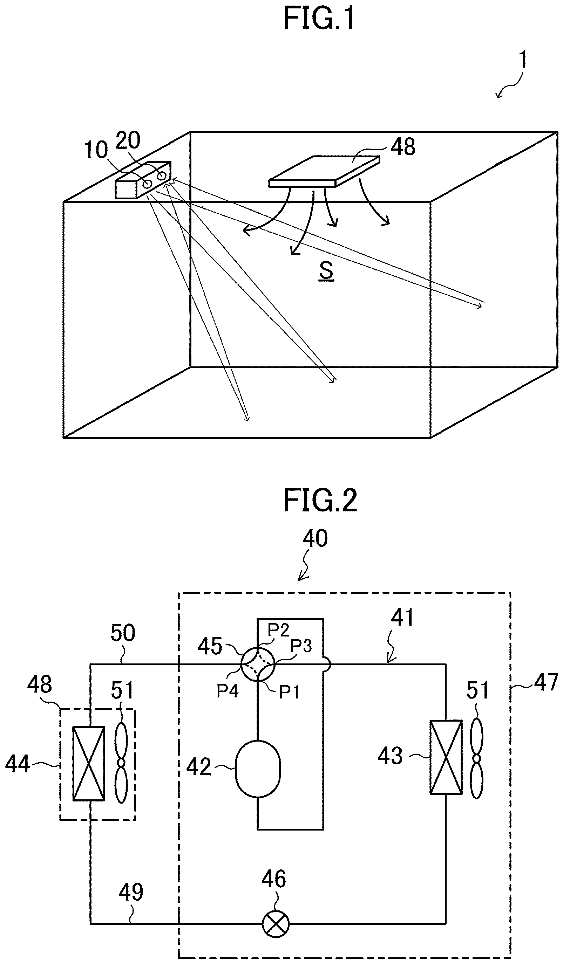

As illustrated in FIG. 1, an environment detection system (1) of this embodiment is a system that measures, by using sound waves, the temperature distribution and air velocity distribution in an indoor space (S) where an air conditioner (40) is installed. The indoor space (S) corresponds to a target space (S) of the present disclosure. The indoor space (S) is formed by the ceiling surface, the wall surfaces, and the floor surface. A speaker (10) and a microphone (20) are arranged at the same location near the ceiling of the indoor space (S). The speaker (10) is configured to transmit detection sound waves to the indoor space (S). The microphone (20) is configured to receive the detection sound waves.

-Air Conditioner-

The air conditioner (40) is an environment control device (40) of the present disclosure. As illustrated in FIG.

2, the air conditioner (40) includes an indoor unit (48) and an outdoor unit (47). The indoor unit (48) of the air conditioner (40) is installed near the center of the ceiling of the indoor space (S). The indoor unit (48) sucks air into the indoor space (S), and blows conditioned air into the indoor space (S) (see the thick arrows in FIG. 1).

The air conditioner (40) performs a cooling operation and a heating operation. The air conditioner (40) includes a refrigerant circuit (41). The refrigerant circuit (41) is formed by connecting the outdoor unit (47) and the indoor unit (48) together through a liquid communication pipe (49) and a gas communication pipe (50). The refrigerant circuit (41) includes a compressor (42), an outdoor heat exchanger (43), an expansion valve (46), an indoor heat exchanger (44), and a four-way switching valve (45). The air conditioner (40) performs a refrigeration cycle operation in which a refrigerant circulates to cool and heat air in the indoor space (S).

<Outdoor Unit>

The outdoor unit (47) is installed outdoors. As illustrated in FIG. 2, the outdoor unit (47) includes the compressor (42), the outdoor heat exchanger (22), the expansion valve (46), the four-way switching valve (45), and an outdoor fan (51).

The compressor (42) sucks and compresses a low-pressure gas refrigerant. The compressor (42) discharges the compressed refrigerant.

The outdoor heat exchanger (22) exchanges heat between outdoor air transported by the outdoor fan (51) and the refrigerant.

The outdoor fan (51) transports outdoor air passing through the outdoor heat exchanger (22).

The expansion valve (46) decompresses the refrigerant. The expansion valve (46) is an electric expansion valve having a variable opening degree. The expansion valve (46) merely needs to be connected to the liquid communication pipe (49) of the refrigerant circuit (41), and may be provided in the indoor unit (48).

The four-way switching valve (45) has a first port (P1), a second port (P2), a third port (P3), and a fourth port (P4). The first port (P1) communicates with the discharge side of the compressor (42). The second port (P2) communicates with the suction side of the compressor (42). The third port (P3) is connected to the gas end of the outdoor heat exchanger (22). The fourth port (P4) is connected to the gas communication pipe (50).

The four-way switching valve (45) switches between a first state (the state indicated by the solid curves in FIG. 2) and a second state (the state indicated by the broken curves in FIG. 2). In the first state, the first port (P1) and the third port (P3) communicate with each other, and the second port (P2) and the fourth port (P4) communicate with each other. In the second state, the first port (P1) and the fourth port (P4) communicate with each other, and the second port (P2) and the third port (P3) communicate with each other.

While the four-way switching valve (45) is in the first state, the refrigerant circuit (41) performs a first refrigeration cycle. In the first refrigeration cycle, the indoor heat exchanger (53) serves as an evaporator. In the first refrigeration cycle, the air conditioner (40) performs the cooling operation.

While the four-way switching valve (45) is in the second state, the refrigerant circuit (41) performs a second refrigeration cycle. In the second refrigeration cycle, the indoor heat exchanger (53) serves as a radiator. In the second refrigeration cycle, the air conditioner (40) performs the heating operation.

<Indoor Unit>

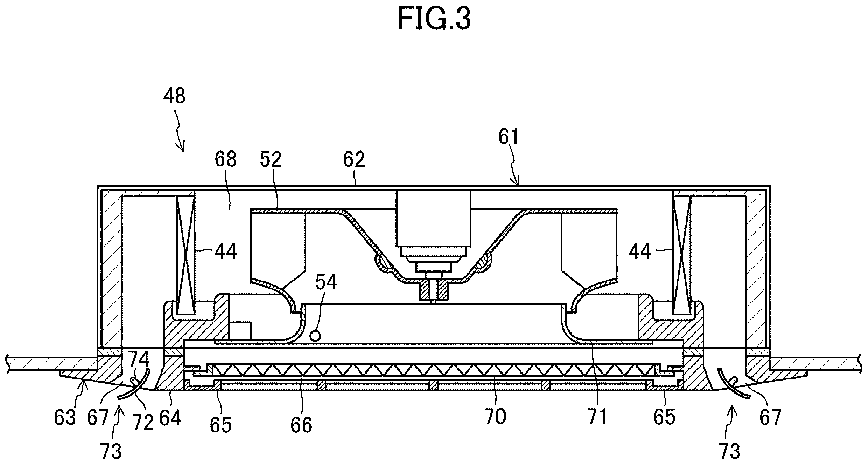

As illustrated in FIG. 3, the indoor unit (48) is a ceiling embedded indoor unit. The indoor unit (48) includes a casing (61), a filter (70), a bell mouth (71), an indoor fan (52), the indoor heat exchanger (53), and airflow direction regulators (73).

The casing (61) includes a casing body (62) and a panel (63). The casing body (62) is formed in the shape of a rectangular box with an open lower surface. The panel (63) is removably provided on the open surface of the casing body (62). The panel (63) includes a panel body (64) in the shape of a rectangular frame in plan view, and a suction grille (65) provided at the center of the panel body (64).

A single inlet (66) is formed in the center of the panel body (64). The inlet (66) is an opening through which air is to be sucked from the indoor space (S) so as to be introduced into the casing. The suction grille (65) is attached to the inlet (66).

Four side edge portions of the panel body (64) each have an outlet (67). The outlets (67) extend along the respective four side edges. The casing (61) includes therein an air passage (68) from the inlet (66) to the outlets (67). The outlets (67) are openings through each of which air that has passed through the indoor heat exchanger (44) is to be blown into the indoor space (S). Four corner portions of the panel (63) each have an auxiliary outlet continuous with associated one of the outlets (67).

The filter (70) is disposed above the suction grille (65). The filter (70) is disposed upstream of the indoor heat exchanger (53) in the air passage (68). The filter (70) catches dust in intake air that is sucked through the inlet (66).

The bell mouth (71) is disposed above the filter (70). The bell mouth (71) straightens the intake air.

The indoor fan (52) is a fan of the present disclosure. The indoor fan (52) is disposed upstream of the indoor heat exchanger (53) in the air passage (68). The indoor fan (52) is a centrifugal fan. The indoor fan (52) sends air from the inlet (66) to the outlets (67). The indoor fan (52) transports air sucked from near the bell mouth (71) to the indoor heat exchanger (53). The indoor fan (52) is configured to switch the volume of air therefrom among a plurality of levels.

The indoor heat exchanger (53) is the heat exchanger (44) of the present disclosure. The indoor heat exchanger (53) is disposed in the air passage (68). The indoor heat exchanger (53) is bent along the four side surfaces of the casing body (62). The indoor heat exchanger (44) regulates the temperature of the air sucked through the inlet (66). Specifically, the indoor heat exchanger (53) exchanges heat between the air transported by the indoor fan (52) and the refrigerant.

Each airflow direction regulator (73) regulates the direction of the air blown out of the associated outlet (67). The airflow direction regulator (73) includes a motor, a shaft (74) coupled to the motor, and a flap (72) rotating with the rotation of the shaft (74). The flap (72) is formed in the shape of a long plate extending along the side edge of the panel body (64) or along the longitudinal direction of the outlet (67). The vertical cross section of the flap (72) is substantially arc-shaped.

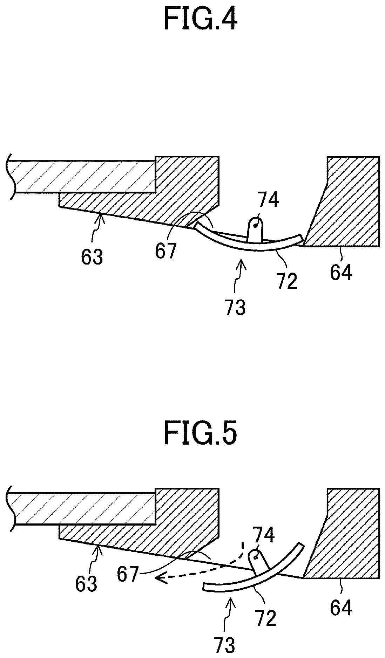

The positions to which the flap (72) of this example is shiftable include six positions. These six positions include the closed position illustrated in FIG. 4 and five open positions. The airflow direction of the air blown out of the outlet (67) can be set in five levels by the five open positions.

<Sensor>

As illustrated in FIGS. 2 and 3, the indoor unit (48) includes a first temperature sensor (54). The first temperature sensor (54) is installed near the inlet (66). The first temperature sensor (54) detects the intake temperature that is the temperature of air sucked through the inlet (66) of the indoor unit (48).

<Control Device>

A control device (100) controls the refrigerant circuit (41). The control device (100) controls the indoor unit (48) and the outdoor unit (47).

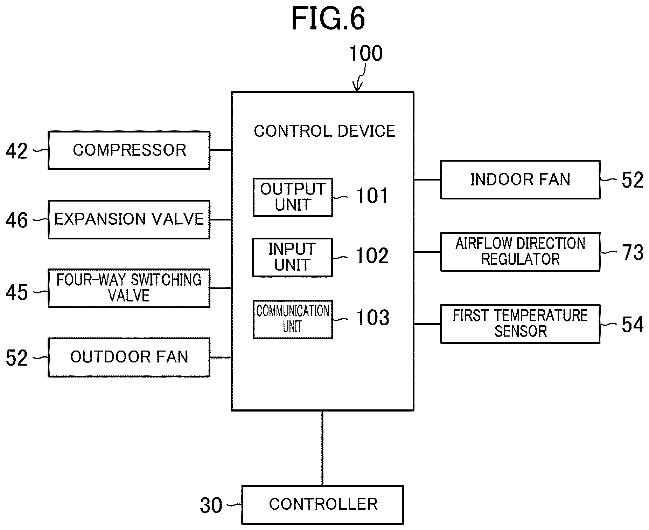

As shown in FIG. 6, the control device (100) is connected to the compressor (42), the expansion valve (46), the four-way switching valve (45), the outdoor fan (51), the indoor fan (52), the airflow direction regulators (73), and the first temperature sensor (54) in a wired or wireless manner. The control device (100) is connected to a controller (C) of an environment detection system to be described later in a wired or wireless manner.

The control device (100) includes an output unit (101), an input unit (102), and a communication unit (103). The output unit (101) outputs a control signal to at least each of the compressor (42), the expansion valve (46), the four-way switching valve (45), the outdoor fan (51), the indoor fan (52), and the flaps (72). The input unit (102) receives values respectively detected by the first temperature sensor (54) and a second temperature sensor (55). The communication unit (103) transmits acquired information to the controller (30) of the environment detection system (1) to be described later. The acquired information includes the value detected by the first temperature sensor (54), the rotational speed of the indoor fan (52), and the opening area of the inlet (66).

<Environment Detection System>

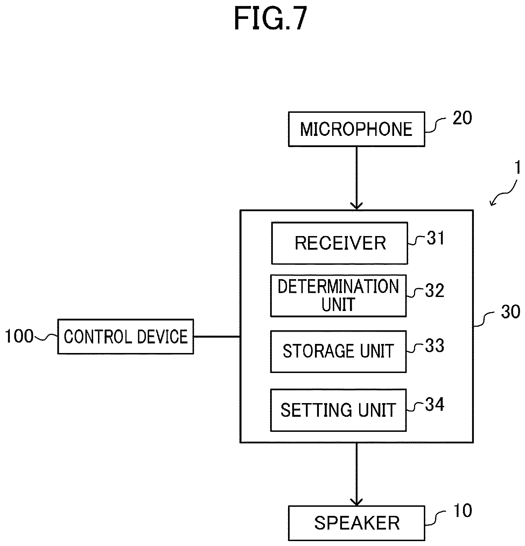

As shown in FIG. 7, the environment detection system (1) includes the speaker (10), the microphone (20), and the controller (30). The environment detection system (1) measures the temperature distribution and air velocity distribution in the indoor space (S), based on the time during which and the distance over which a detection sound wave propagates from when the speaker (10) transmits the detection sound wave to when the microphone receives the detection sound wave.

The speaker (10) is a sound wave transmitter. The speaker (10) transmits detection sound waves. The speaker (10) transmits the detection sound waves in various directions in the indoor space (S). The plurality of detection sound waves transmitted from the speaker (10) propagates through the indoor space. Some of the detection sound waves are reflected off the floor surface, the wall surfaces, and other surfaces.

The microphone (20) is a sound wave receiver. The microphone (20) receives the detection sound waves transmitted by the speaker (10), and generates and outputs electric signals corresponding to the received detection sound waves. The microphone (20) directly receives the detection sound waves from the speaker (10), and receives the detection sound waves reflected off the floor surface and the wall surfaces. FIG. 1 shows that the microphone (20) has received the detection sound waves transmitted from the speaker (10) and reflected off the floor surface and the wall surfaces.

As illustrated in FIG. 7, the controller (30) includes a microcomputer mounted on a control board and a memory device (specifically, a semiconductor memory) that stores software for operating the microcomputer.

The controller (30) controls the speaker (10) based on an input signal input by an operator and a detection signal from the microphone (20). The controller (30) is connected to the speaker (10), the microphone (20), and the control device (100) of the air conditioner (40) via communication lines.

The controller (30) includes a setting unit (34), a storage unit (33), a receiver (31), and a determination unit (32).

The setting unit (34) divides the indoor space (S) into a plurality of regions $A_n$ (n = 1, 2, ... n). The setting unit (34) groups the resultant regions $A_n$ into a first region Ap and a second region Aq. As will be described in detail later, the first region Ap is a region near the air conditioner (40). The second region Aq corresponds to the regions $A_n$ of the indoor space (S) except the first region Ap.

The storage unit (33) records path information. The path information includes the lengths of sound wave propagation paths from when the speaker (10) transmits detection sound waves to when the microphone (20) receives the detection sound waves. The path information is recorded in the storage unit (33) in advance. The lengths of the sound wave propagation paths refer to the lengths of the paths through which the detection sound waves transmitted at different angles from the speaker (10) propagate. As will be described in detail later, the detection sound waves pass through the respective regions $A_n$. Distance information indicates the distances over which the detection sound waves propagate through the respective regions $A_n$.

The receiver (31) receives the acquired information. The acquired information is sent from the communication unit (103) of the control device (100) included in the air conditioner (40).

The determination unit (32) determines that the intake temperature that is included in the acquired information and that is the value detected by the first temperature sensor (54) is the temperature of the first region Ap. The determination unit (32) calculates the intake air velocity that is the velocity of air sucked into the inlet (66), based on the rotational speed of the indoor fan (52) and the opening area of the inlet (66) that are included in the acquired information. The determination unit (32) determines that the calculated intake air velocity is the velocity of air through the first region Ap.

<Measurement of Temperature Distribution and Air Velocity Distribution>

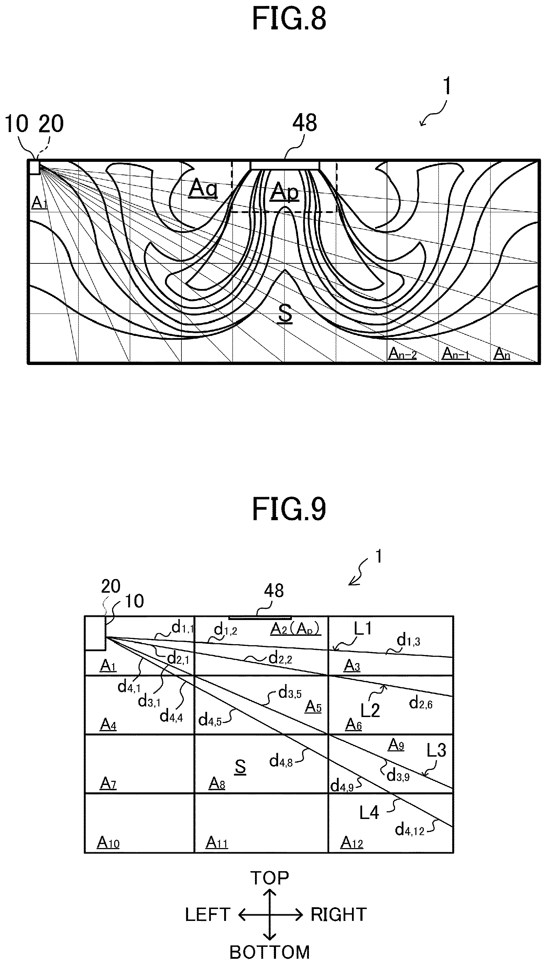

While air in the indoor space (S) is conditioned by the air conditioner (40), the temperature and air velocity in the indoor space (S) are not uniform. FIG. 8 shows the temperature distribution in the indoor space (S) while the air conditioner is performing the heating operation. The temperature of the air blown out of the outlet of the air conditioner (40) is highest, and the temperature decreases gradually with increasing distance from the air conditioner (40).

One or more detection sound waves transmitted from the speaker (10) pass through the respective regions $A_n$ (n = 1, 2, . . . n) of the indoor space (S). If the temperature and air velocity in each of the regions $A_n$ is obtained based on the distance over which and the time during which the detection sound wave passing through the region $A_n$ propagates, the temperature distribution and air velocity distribution in the entire indoor space (S) can be obtained.

In FIG. 8, a plurality of regions (the region surrounded by the broken lines) adjacent to the indoor unit of the air conditioner serve as the first region, and the remaining regions serve as the second region. In other words, in FIG. 8, a plurality of regions located directly below the indoor unit serve as the first region. The first region of this embodiment includes one or more regions $A_n$ adjacent to at least either the inlet or the outlets of the indoor unit.

A method for measuring the temperature distribution and air velocity distribution in the indoor space (S) will be described below. For ease of explanation, reference is made to FIG. 9.

FIG. 9 illustrates a horizontal cross section of the indoor space (S). The indoor space (S) is divided into twelve regions $A_n$ (n = 1 to 12), each four of which are arranged in the top-to-bottom direction and each three of which are arranged in the right-to-left direction.

The speaker (10) and the microphone (20) are installed on the left wall surface of the region $A_1$ of the indoor space (S). The indoor unit (48) is installed on the ceiling surface in the region $A_2$. The region $A_2$ is the first region Ap. The regions except the region $A_2$ correspond to the second region Aq ($A_1$, $A_3$, $A_4$, ..., $A_{12}$).

The plurality of detection sound waves transmitted from the speaker (10) propagate toward the right wall surface. Here, the propagation path of the detection sound wave that has reached a portion of the right wall surface in the region $A_3$ is referred to as a "first propagation path $L_1$." The microphone (20) receives the detection sound wave that has reciprocated through the first propagation path $L_1$.

Likewise, the propagation path of the detection sound wave that has reached a portion of the right wall surface in the region $A_6$ is referred to as a "second propagation path $L_2$," the propagation path of the detection sound wave that has reached a portion of the right wall surface in the region $A_9$ is referred to as a "third propagation path $L_3$," and the propagation path of the detection sound wave that has reached a portion of the right wall surface in the region $A_{12}$ is referred to as a "fourth propagation path $L_4$." The microphone (20) receives the detection sound wave that has reciprocated through each of the second to fourth propagation paths ($L_2$ to $L_4$).

Here, the distance $D_m$ (m = 1 to 4) of each of the propagation paths $L_m$ (m = 1 to 4) is the sum of the distances $d_{m,n}$ over which the detection sound wave propagating through the propagation path $L_m$ passes through the associated regions $A_n$ (n = 1 to 12). Specifically, a first distance $D_1$ of the first propagation path $L_1$ is expressed by $D_1 = d_{1,1} + d_{1,2}$

+ $d_{1,3}$. A second distance $D_2$ of the second propagation path $L_2$ is expressed by $D_2 = d_{2,1} + d_{2,2} + d_{2,6}$. A third distance $D_3$ of the third propagation path $L_3$ is expressed by $d_{3,1} + d_{3,5} + d_{3,9}$. A fourth distance $D_4$ of the fourth propagation path $L_4$ is expressed by $d_{4,1} + d_{4,4} + d_{4,5} + d_{4,8} + d_{4,9} + d_{4,12}$.

The temperature distribution in the indoor space (S) is obtained as follows. The following relational expression is satisfied:

[Formula 1]

$$v_n = 3\,3\,1.\;5 + \alpha \times t_n$$

where $v_n$ (n = 1 to 12) represents the propagation velocity (m/s) of the detection sound wave propagating through each region $A_n$, and $t_n$ (n = 1 to 12) represents the temperature (deg C) of the region $A_n$.

The value "331.5" (m/s) of [Formula 1] represents the sound velocity, and $\alpha$ represents a predetermined constant. Here, the air temperature detected by the first temperature sensor (54) can be assumed to be the air temperature in the first region Ap ($A_2$). This is because the first temperature sensor (54) detects the temperature of air drawn from the first region Ap by the indoor unit (48). For this reason, the intake temperature of air through the inlet (66) of the indoor unit (48) is assumed to be the air temperature in the first region Ap. The propagation velocity $v_2$ through the first region Ap ($A_2$) is calculated by entering the value of the air temperature (intake temperature) detected by the first temperature sensor (54) into "$t_2$" of [Formula 1].

The propagation time $T_m$, the propagation distance $d_{m,n}$, and the propagation velocity $v_m$ of a detection sound wave satisfy the following relational expression [Formula 2]:

[Formula 2]

$$\begin{bmatrix} T_1 \\ T_2 \\ T_3 \\ T_4 \end{bmatrix} = 2 \begin{bmatrix} d_{11} & d_{12} & d_{13} & d_{14} \\ d_{21} & d_{22} & d_{23} & d_{24} \\ d_{31} & d_{32} & d_{33} & d_{34} \\ d_{41} & d_{42} & d_{43} & d_{44} \end{bmatrix} \begin{bmatrix} 1/v_1 \\ 1/v_2 \\ 1/v_3 \\ 1/v_4 \end{bmatrix}$$

where the propagation time $T_m$ (m = 1 to 4) represents the time during which the detection sound wave propagating through each propagation path $L_n$ (n = 1 to 4) reciprocates.

The propagation velocity $v_2$ through the first region Ap ($A_2$) calculated by [Formula 1] described above is entered into the system of simultaneous equations defined as [Formula 2]. The propagation velocities $v_n$ through the regions ($A_1$, $A_3$, $A_4$, ..., $A_{12}$) of the second region Aq can be obtained by calculating the system of simultaneous equations defined as [Formula 2] into which this known value $v_2$ has been entered using the method of least squares. The temperatures $t_n$ in the regions ($A_1$, $A_3$, $A_4$, ..., $A_{12}$) of the second region Aq can be obtained by the propagation velocities $v_n$ and [Formula 1].

Next, the air velocity distribution in the indoor space (S) is obtained as follows. The airflow velocity (m/s) through each of the regions $A_n$ is denoted by $u_n$ (n = 1 to 4). While the sound wave propagates forward through each propagation path $L_n$, the airflow forms a tailwind that follows the propagating sound wave. On the other hand, while the sound wave returns therethrough, the airflow forms a head wind that opposes the propagating sound wave. While the airflow forms a tailwind, the propagation velocity of the detection sound wave increases by the airflow velocity $u_n$. On the other hand, while the airflow forms a head wind, the propagation velocity of the detection sound wave decreases by the airflow velocity $u_n$. Thus, the propagation velocity $v_{na}$ during forward propagation of the sound wave (in a situation where the airflow forms a tailwind) and the propagation velocity $v_{nb}$ during return propagation of the sound wave (in a situation where the airflow forms a head wind) satisfy the relational expressions [Formula 3] and [Formula 4], respectively.

[Formula 3]

$$v_{na} = 3\,3\,1.\,5 + \alpha \times t_n + u_n$$

[Formula 4]

$$v_{nb} = 3\,3\,1.\,5 + \alpha \times t_n - u_n$$

Here, the air velocity of air drawn into the inlet (66) of the indoor unit (48) (intake air velocity) can be assumed to be the air velocity in the first region Ap ($A_2$). This is because the air in the first region Ap flows toward the inlet (66) of the indoor unit (48). The intake air velocity is calculated based on the rotational speed of the indoor fan (52) and the opening area of the inlet (66). Specifically, the volume of air drawn per unit time can be obtained based on the rotational speed of the indoor fan (52). The air velocity through the inlet (66) can be obtained by dividing the rotational speed of the indoor fan (52) by the opening area. Thus, the propagation velocity $v_{2a}$ during the forward propagation, and the propagation velocity $v_{2b}$ during the return propagation, through the first region Ap ($A_2$) are calculated by entering the value of the intake air velocity and the value of the above-described intake temperature into "$u_2$" and "$t_2$," respectively, in each of [Formula 3] and [Formula 4].

The regions $A_3$, $A_6$, $A_9$, and $A_{12}$ touch the wall surface. Thus, the air velocity in each of these regions can be supposed to be substantially zero. This is because the friction between the airflow and the wall surface causes the air velocity near the wall surface to be very low. Thus, the propagation velocities $v_{3a}$, $v_{6a}$, and $v_{9a}$ during the forward propagation, and the propagation velocities $v_{12a}$, $v_{3b}$, $v_{6b}$, and $v_{9b}$ during the return propagation, through the respective regions $A_3$, $A_6$, $A_9$, and $A_{12}$ are each calculated by entering zero into an associated one of "$u_3$," "$u_6$," "$u_9$," and "$u_{12}$" and entering the temperature value obtained by [Formula 2] into an associated one of "$t_3$," "$t_6$," "$t_9$," and "$t_{12}$," in each of [Formula 3] and [Formula 4].

The propagation time $T_n$ of a detection sound wave, the propagation distance $d_{mn}$, and the propagation velocity $v_n$ satisfy the following relational expression [Formula 5]:

[Formula 5]

$$
\begin{bmatrix} T_1 \\ T_2 \\ T_3 \\ T_4 \end{bmatrix}
=
\begin{bmatrix} d_{1,1} & d_{1,2} & \ldots & d_{1,12} \\ d_{2,1} & d_{2,2} & \ldots & d_{2,12} \\ d_{3,1} & d_{3,2} & \ldots & d_{3,12} \\ d_{4,1} & d_{4,2} & \cdots & d_{4,12} \end{bmatrix}
\begin{bmatrix} 1/v_{1a} \\ 1/v_{2a} \\ . \\ . \\ . \\ 1/v_{12a} \end{bmatrix}
+
\begin{bmatrix} d_{1,1} & d_{1,2} & \ldots & d_{1,12} \\ d_{2,1} & d_{2,2} & \ldots & d_{2,12} \\ d_{3,1} & d_{3,2} & \ldots & d_{3,12} \\ d_{4,1} & d_{4,2} & \cdots & d_{4,12} \end{bmatrix}
\begin{bmatrix} 1/v_{1b} \\ 1/v_{2b} \\ . \\ . \\ . \\ 1/v_{12b} \end{bmatrix}
$$

where the propagation time $T_n$ (n = 1 to 4) represents the time during which the detection sound wave propagating through each propagation path $L_n$ (n = 1 to 4) reciprocates.

The propagation velocity $v_{2a}$ during the forward propagation and the propagation velocity $v_{2b}$ during the return propagation through the first region Ap ($A_2$) respectively calculated by [Formula 3] and [Formula 4] described above are entered into the system of simultaneous equations defined as [Formula 5].

The propagation velocities $v_{3a}$, $v_{6a}$, and $v_{9a}$ during the forward propagation and the propagation velocities $v_{12a}$, $v_{3b}$, $v_{6b}$, and $v_{9b}$ during the return propagation, through the respective regions $A_3$, $A_6$, $A_9$, and $A_{12}$ are entered into the system of simultaneous equations as [Formula 5]. The propagation velocities $v_{3a}$, $v_{6a}$, and $v_{12a}$ during the forward propagation have been calculated by [Formula 3] described above, and the propagation velocity $v_{12a}$, $v_{3b}$, $v_{6b}$, and $v_{9b}$ have been calculated by [Formula 4] described above.

In [Formula 5], zero is entered into each of the propagation distances (e.g., $d_{1,12}$) that are not shown in FIG. 9.

The propagation velocities $v_n$ in the regions ($A_1$, $A_3$, $A_4$, ..., $A_{12}$) of the second region Aq can be obtained by calculating the system of simultaneous equations defined as [Formula 5] into which these known values have been entered using the method of least squares. More specifically, addition of another speaker (10) and another microphone (20) or any other method allows the left term (forward propagation) and right term (return propagation) of the right side of [Formula 5] to be separately measured, thereby calculating the values $V_{na}$ and $V_{nb}$ from the system of simultaneous equations defined as [Formula 5]. The air velocity in each of the regions $A_n$ (n = 1, 3, 4, ..., 12) of the second region Aq can be obtained by the propagation velocities $v_n$, [Formula 3], [Formula 4], and the temperature $t_n$ in the region $A_n$ of the second region Aq. The air velocity in each of the regions $A_3$, $A_6$, $A_9$, and $A_{12}$ is zero.

<Process for Measuring Temperature Distribution and Velocity Distribution>

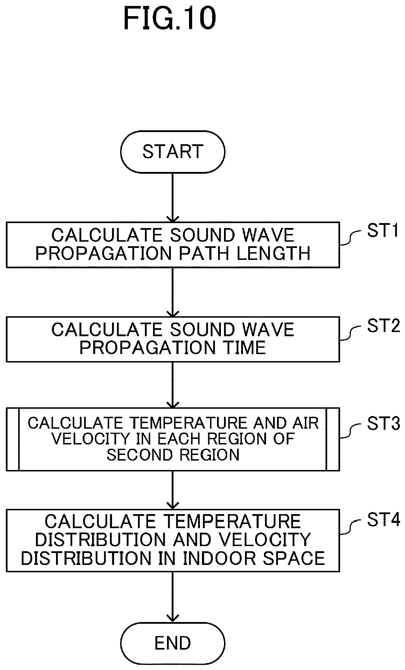

Next, a process in which the environment detection system (1) measures the temperature distribution and the velocity distribution in the indoor space (S) will be described with reference to FIG. 10.

In the following steps ST1 and ST2, the controller (30) acquires measured sound wave data. The measured sound wave data indicates the propagation distance and propagation time of the detection sound wave.

In step ST1, the controller (30) acquires distance information on a plurality of detection sound waves propagating through the indoor space (S) on a region An-by-region $A_n$ basis, from the path information stored in the storage unit (33).

In step ST2, the controller (30) measures the amount of time elapsed between the instant when the speaker (10) transmits a detection sound wave and the instant when the microphone (20) receives the detection sound wave. This amount of time elapsed is used as the propagation time of the detection sound wave.

In step ST3, the controller (30) calculates the temperature and air velocity in each of the regions $A_n$ of the second region Aq, based on the temperature and air velocity in the first region Ap, the measured sound wave data derived from steps ST1 and ST2 (the propagation distance and propagation time of the detection sound wave passing through the region $A_n$), and the temperature and air velocity in the first region Ap. The controller (30) records the calculated temperature and air velocity in the region $A_n$ of the second region Aq in the storage unit (33).

In step ST4, the controller (30) measures the temperature distribution and air velocity distribution in the indoor space (S), based on the temperature and air velocity in each region $A_n$ that have been calculated in step ST7.

<Calculation of Temperature and Air Velocity in Second Region>

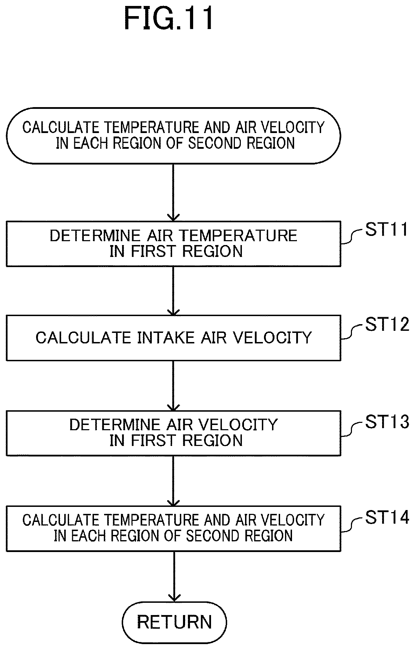

A process in which the controller (30) measures the temperature and air velocity in the second region in step ST3 will be described with reference to FIG. 11.

In step ST11, the controller (30) determines that the air temperature (intake temperature) that is included in the acquired information acquired from the communication unit (103) and that is detected by the first temperature sensor (54) is the air temperature in the first region Ap.

In step ST12, the controller (30) calculates the air velocity (intake air velocity), based on the rotational speed of the fan (52) and the opening area of the inlet (66) that are included in the acquired information acquired from the communication unit (103).

In step ST13, the controller (30) determines that the intake air velocity is the air velocity in the first region Ap.

In step ST14, the controller (30) obtains the propagation velocity in the first region Ap, based on the temperature in the first region Ap determined in step ST11. The controller (30) calculates the temperature in each region $A_n$ of the second region Aq, based on the propagation velocity in the first region Ap and the measured sound wave data. Specifically, [Formula 2] described above will be described as an example. The value detected by the first sensor (intake temperature) is assigned to the temperature $t_2$ in the first region Ap in the system of simultaneous equations defined as [Formula 2]. Solving this system of simultaneous equations allows the temperature in each region $A_n$ of the second region Aq to be calculated.

The controller (30) obtains the propagation velocity in the first region Ap, based on the air velocity in the first region Ap determined in step ST13. The controller (30) calculates the air velocity in each region $A_n$ of the second region Aq, based on the propagation velocity in the first region Ap and the measured sound wave data. Specifically, [Formula 5] described above will be described as an example. The intake air velocity calculated in step S12 is assigned to the air velocity $u_2$ in the first region Ap in the system of simultaneous equations defined as [Formula 5]. Solving this system of simultaneous equations allows the air velocity in each region $A_n$ of the second region Aq to be calculated.

<Feature (1) of Embodiment>

The environment detection system (1) according to the embodiment includes the speaker (10) (sound wave transmitter) configured to transmit a detection sound wave to an indoor space (S) (target space) where the air conditioner (40) is installed, the microphone (20) (sound wave receiver) configured to receive the detection sound wave transmitted by the speaker (10), and the controller (30) (control unit) configured to control the speaker (10), and further includes a determination unit (32) configured to determine at least either the temperature or air velocity in the first region Ap, based on the predetermined acquired information acquired from the air conditioner (40). The temperature distribution and air velocity distribution in the second region Aq of the indoor space (S) except the first region Ap are obtained based on the temperature and air velocity in the first region Ap determined by the determination unit (32) and the measured sound wave data.

Here, a system in which the temperature distribution and air velocity distribution in a space are measured using sound waves calculates the temperature and air velocity in a space, based on the propagation time and propagation distance of a sound wave. The actual measurement values of the temperature and air velocity in the space are not directly acquired. Thus, measuring each of these values using sound waves may cause the error from the associated actual measurement value to be relatively large. The propagation distance of the sound wave, in particular, through a relatively large space increases, resulting in an increase in attenuation. In addition, the number of reflections off the wall surfaces, the floor surface, and other surfaces, the reflection coefficient, and other factors may increase the attenuation even in a relatively small space. In such a case, measuring the temperature distribution and air velocity distribution in the space using sound waves may prevent the accuracy of this measurement from being stable.

To address this problem, the temperature and air velocity at a predetermined location in the space may be actually measured, and a value of temperature measured using sound waves may be corrected, based on the actual measurement value of the temperature. This creates a need to separately provide a temperature sensor and an air velocity sensor, resulting in an increase in the number of components. In addition, a need arises to previously secure the location to which such a temperature sensor or such an air velocity sensor is to be attached in the space.

In contrast, according to the feature (1) of the embodiment, the temperature and air velocity in the first region Ap near the air conditioner (40) are determined by the acquired information acquired from the air conditioner (40). The temperature distribution and air velocity distribution in the second region Aq are calculated, based on the temperature and air velocity in the first region Ap and the measured sound wave data. Thus, when the temperature distribution and air velocity distribution in the entire indoor space (S) are to be measured, the temperature and air velocity derived based on the acquired information can be used for the first region Ap. As a result, the accuracies of measurement of the temperature and air velocity in each region An of the second region Aq can be improved, and the reliability of the results of measurement of the temperature distribution and air velocity distribution in the indoor space (S) can be improved, as compared with the case where calculation is performed based on only the measured sound wave data.

<Feature (2) of Embodiment

In the environment detection system (1) of the embodiment, the acquired information is the intake temperature that is the temperature of air drawn through the inlet (66) by the air conditioner (40). The determination unit (32) determines that the intake temperature is the temperature in the first region Ap. The temperature distribution in the second region Aq is obtained based on the temperature in the first region determined by the determination unit (32) and the measured sound wave data.

According to the feature (2) of the embodiment, the intake temperature of the air conditioner (40) is determined to be the temperature in the first region Ap. This eliminates the need for separately providing a temperature sensor in the first region Ap. This can reduce an increase in the number of components forming the environment detection system (1).

In addition, the air temperature in the first region Ap is substantially the same as the intake temperature of the air conditioner (40). The intake temperature can be accurately detected by the first temperature sensor (54). Thus, determining the value detected by the first temperature sensor (54) to be the temperature in the first region Ap improves the accuracy of measurement of the temperature in each region $A_n$ of the second region Aq.

<Feature (3) of Embodiment

In the environment detection system (1) of the embodiment, the acquired information corresponds to the rotational speed of the indoor fan (52) (fan) and the opening area of the inlet (66). The determination unit (32) calculates the intake air velocity that is the velocity of air drawn into the inlet (66) of the air conditioner (40), based on the acquired information, determines that the intake air velocity is the air velocity in the first region Ap, and obtains the air velocity distribution in the second region Aq, based on the air velocity in the first region Ap determined by the determination unit (32) and the measured sound wave data.

According to the feature (3) of the embodiment, the intake air velocity of the air conditioner (40) is determined to be the air velocity in the first region Ap. This eliminates the need for separately providing an air velocity sensor in the first region Ap. This can reduce an increase in the number of components forming the environment detection system (1).

In addition, the intake air velocity can be relatively accurately calculated based on the rotational speed of the indoor fan (52) and the opening area of the inlet (66). Thus, determining the value of air velocity calculated from the acquired information to be the value of air velocity in the first region Ap improves the accuracy of measurement of the air velocity in each region $A_n$ of the second region Aq.

<Feature (4) of Embodiment>

In the environment detection system (1) of the embodiment, the second region Aq is divided into the plurality of regions An. The air velocity distribution in the second region Aq is obtained, where the air velocity in some of the regions An touching the wall surfaces, the floor surface, and the ceiling surface of the indoor space (S) is zero.

According to the feature (4) of the embodiment, some of the air velocities un in [Formula 5] corresponding to the regions $A_3$, $A_6$, $A_9$, and $A_{12}$ touching the wall surface, for example, can be entered as zero. This increases the number of known values entered into [Formula 5] in addition to the air velocity in the first region Ap. As a result, the accuracy of the air velocity distribution in the second region Aq can be reliably improved.

«Variation»

In an environment detection system (1) of the variation, the air temperature and air velocity in the first region Ap are determined to be the temperature and velocity, respectively, of air blown out of the outlet (67) of the air conditioner (40). Thus, differences from the environment detection system (1) of the embodiment will be described below.

<Indoor Unit>

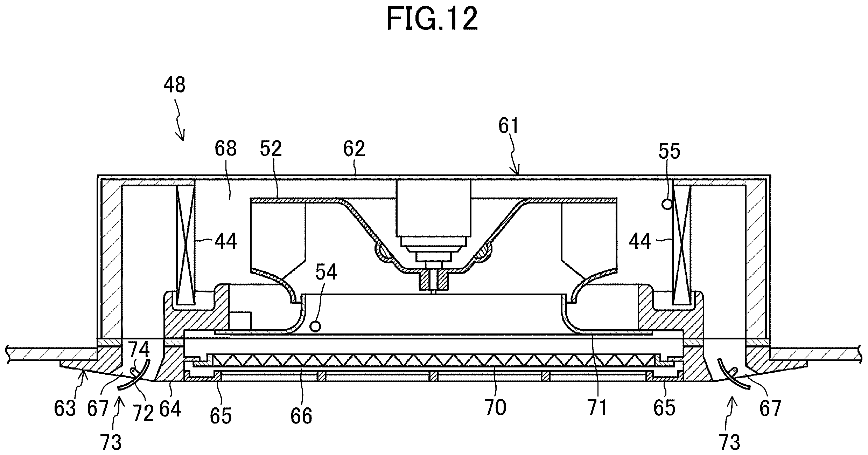

As illustrated in FIG. 12, the indoor unit (48) includes a second temperature sensor (55). The second temperature sensor (55) detects the temperature of the indoor heat exchanger (44). Specifically, an electrode (a part that detects the temperature) of the second temperature sensor (55) touches the surface of the indoor heat exchanger (44).

The second temperature sensor (55) is connected to the control device (100) in a wired or wireless manner. Information on the temperature detected by the second temperature sensor (55) is entered into the input unit (102) of the control device (100). The acquired information transmitted to the controller (30) of the air conditioner (40) by the communication unit (103) includes information on the temperature detected by the second temperature sensor (55).

<Environment Detection System>

The acquired information received by the controller (30) includes the temperature of the heat exchanger (44), the temperature of the air drawn through the inlet (66), the rotational speed of the indoor fan (52), the orientation of each flap (72), and the opening area of each outlet (67). The temperature of the heat exchanger (44) is the temperature detected by the second temperature sensor (55). The temperature of the air drawn through the inlet (66) is the temperature detected by the first temperature sensor (54). The flap (72) is oriented in any one of its five open positions.

<Measurement of Temperature Distribution and Air Velocity Distribution>

The temperature of air blown out of the outlets (67) of the indoor unit (48) (blow-out temperature) can be assumed to be the air temperature in the first region Ap. This is because the air temperature in the first region Ap is substantially the same as the temperature of the air blown out of the outlets (67) of the indoor unit (48) into the first region Ap.

The blow-out temperature is calculated based on the temperature of the indoor heat exchanger (44), the temperature of the air drawn into the inlet (66), the rotational speed of the indoor fan (52), and the orientation of each flap (72).

Specifically, the blow-out temperature is calculated using the temperature difference $\Delta T$ between the temperature of the intake air drawn into the inlet (66) and the temperature of the indoor heat exchanger (44), the amount J of heat exchanged with the intake air by the indoor heat exchanger (44), and the volume V of air passing through the indoor heat exchanger (44). The temperature difference $\Delta T$ is calculated using the difference between the temperatures respectively detected by the first and second temperature sensors (54) and (55). The amount J of heat is calculated based on the temperature difference $\Delta T$ and the known properties of the indoor heat exchanger (44). The volume V of the air is calculated based on the rotational speed of the indoor fan (52) and the open position of each flap (72). The temperature of the air that has passed through the indoor heat exchanger (44) can be calculated as the blow-out temperature, based on the volume V of the air and the amount J of the heat.

The velocity of the air blown out of the outlets (67) of the indoor unit (48) (blow-out air velocity) can be assumed to be the air velocity in the first region Ap. This is because the velocity of the air in the first region Ap is substantially the same as the flow rate of the air blown out of the outlets (67) of the indoor unit (48).

The blow-out air velocity is calculated based on the rotational speed of the indoor fan (52), the opening area of each outlet (67), and the orientation of each flap (72).

Specifically, the volume of air blown per unit time can be obtained based on the rotational speed of the indoor fan (52). The substantial opening area of each outlet (67) can be determined by the open position of the associated flap (72). The air velocity through the outlet (67) can be obtained by dividing the rotational speed of this indoor fan (52) by the substantial opening area of the outlet (67).

<Measuring Process of Temperature and Air Velocity in Second Region>

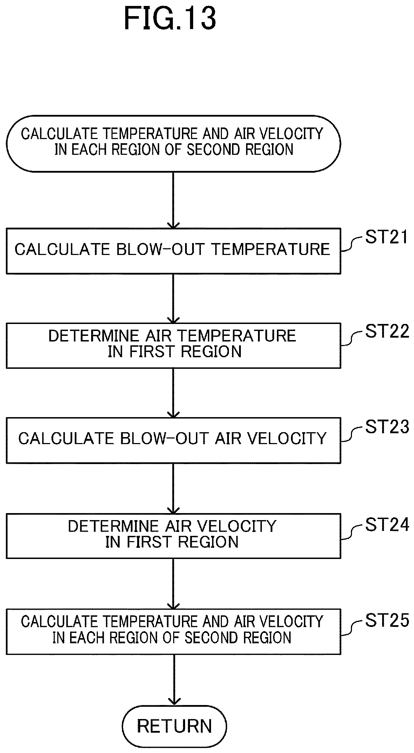

As shown in FIG. 13, the temperature and air velocity in the second region in the variation are calculated by the following process.

In step ST21, the controller (30) calculates the blow-out temperature that is the temperature of air blown out of the outlets (67) of the indoor unit (48), based on the temperature of the heat exchanger (44), the temperature of air drawn through the inlet (66), the rotational speed of the indoor fan (52), and information indicating that the flaps (72) are in their open state, which are included in acquired information acquired from the communication unit (103).

In step ST22, the determination unit (32) of the controller (30) determines that the blow-out temperature calculated in step ST21 is the temperature of air in the first region Ap.

In step ST23, the controller (30) calculates the velocity of air blown out of the outlets of the indoor unit (48) (blow-out air velocity), based on the rotational speed of the fan (52), the opening area of the inlet (67), and the open position of each flap (72), which are included in the acquired information acquired from the communication unit (103).

In step ST24, the controller (30) determines that the blow-out air velocity calculated in step ST23 is the air velocity in the first region Ap.

In step ST25, the controller (30) obtains the propagation velocity in the first region Ap, based on the temperature in the first region Ap determined in step ST22. The controller (30) calculates the temperature in each region An of the second region Aq, based on the propagation velocity in the first region Ap and the measured sound wave data. Specifically, [Formula 2] described above will be described as an example. The blow-out temperature calculated in step ST21 is assigned to the temperature $t_2$ in the first region Ap in the system of simultaneous equations defined as [Formula 2]. Solving this system of simultaneous equations allows the temperature in each region An of the second region Aq to be calculated.

The controller (30) obtains the propagation velocity in the first region Ap, based on the air velocity in the first region Ap determined in step ST24. The controller (30) calculates the air velocity in each region An of the second region Aq, based on the propagation velocity in the first region Ap and the measured sound wave data. Specifically, [Formula 5] described above will be described as an example. The blow-out air velocity calculated in step ST23 is assigned to the air velocity $u_2$ in the first region Ap in the system of simultaneous equations defined as [Formula 5]. Solving this system of simultaneous equations allows the air velocity in each region An of the second region Aq to be calculated.

Also in this variation, the blow-out temperature and the blow-out air velocity of the indoor unit (48) are determined to be the temperature and air velocity in the first region Ap, respectively. This eliminates the need for separately providing a temperature sensor and an air velocity sensor in the first region Ap. The temperature and air velocity in each region An of the second region are measured based on the temperature and air velocity in the first region Ap determined by the determination unit (32) and the measured sound wave data. This can improve the accuracies of measurement of the temperature distribution and air velocity distribution in the indoor space (S) as compared with the case where only the measured sound wave data is used.

«Second Embodiment»

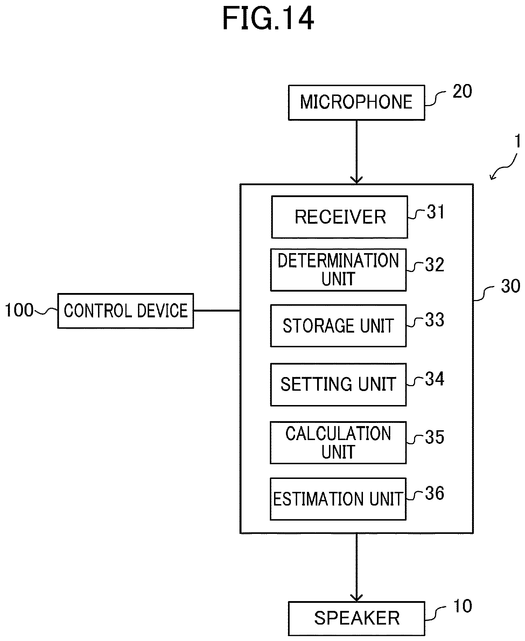

An environment detection system (1) of the second embodiment estimates the effectiveness of ventilation of an indoor space (S) based on the air velocity distribution in the indoor space (S). Specifically, as shown in FIG. 14, a controller (30) of the environment detection system (1) of this example includes a calculation unit (35) and an estimation unit (36).

The calculation unit (35) obtains the air age distribution in the indoor space (S) based on the air velocity distribution in the indoor space (S). Specifically, the calculation unit (35) obtains the air age distribution in the indoor space (S) based on the calculated air velocity in each region An of the second region Aq. More specifically, the calculation unit (35) obtains the air age distribution based on the air velocity distribution in the second region Aq, by using a predetermined arithmetic expression. The air age is the time taken for the air that has flowed into the indoor space (S) to reach a certain location in the indoor space (S). The location at which the air age is lower indicates that air at this location is fresher, whereas the location at which the air age is higher indicates that air at this location is more stagnant. As can be seen, the air age enables grasping of the state of stagnation in the indoor space (S). For example, a passive scalar equation can be used as the predetermined arithmetic expression.

The estimation unit (36) estimates the stagnation of the air from the air age distribution in the indoor space (S). Specifically, the estimation unit (36) estimates the air age in each region An calculated by the calculation unit (35). The estimation unit (36) estimates that some of the regions An where the air age is relatively high contain relatively stagnant air. In contrast, the estimation unit (36) estimates that some of the regions $A_n$ where the air age is relatively low contain relatively fresh air. In this manner, the estimation performed by the estimation unit (36) enables grasping of non-uniform air age distribution in the indoor space (S). An example of how the stagnation of the air in the indoor space (S) is estimated will be described below.

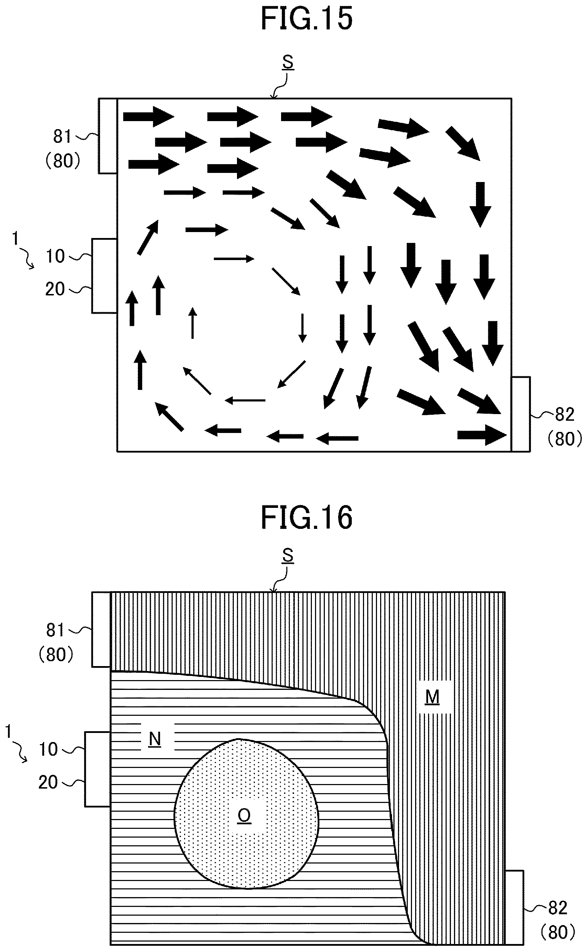

As shown in FIG. 15, a ventilator (80) is provided for the indoor space (S). The ventilator (80) has an air supply port (81) and an exhaust port (82). The exhaust port (82) is disposed in a diagonal line when the indoor space (S) is viewed from above. Air blown out of the air supply port (81) passes through the indoor space (S), and is discharged through the exhaust port (82) to the outside. In the indoor space (S), an airflow is generated by blowing the air out of the air supply port (81) and exhausting the air toward the exhaust port (82).

In FIG. 15, the air velocity distribution in the indoor space (S) is indicated by the arrows. The thickness of each arrow indicates the magnitude of the air velocity. The thicker the arrow is, the higher the air velocity is. The direction of the arrow indicates the direction in which air flows. As illustrated in FIG. 16, the air velocity $V_M$ in a region M of the indoor space (S) shaded with vertical lines is higher, the air velocity $V_N$ in a region N of the indoor space (S) shaded with horizontal lines is lower, and the air velocity Vo in a region O of the indoor space (S) shaded with dots is further lower $(V_M > V_N > V_O)$.

The air ages in the regions M, N, and O obtained by the calculation unit (35) are supposed to be one second, 10 seconds, and 20 seconds, respectively. Based on such an air age distribution in the indoor space (S), the estimation unit (36) estimates that air in the region M is freshest and that air in the region O is most stagnant. In addition, the estimation unit (36) estimates that air in the region N is fresher than the air in the region O and is more stagnant than the air in the region M. The estimation unit (36) may show an index indicating the degree of stagnation of air in each region based on the air ages calculated by the calculation unit (35).

According to this example, the effectiveness of ventilation of the indoor space (S) can be estimated. Even if the amount of ventilation is adequate, estimating non-uniform air age distribution in the indoor space (S) enables grasping of whether the entire indoor space (S) has been adequately ventilated. Thus, for example, in the ventilator (80), regulating the positions of the air supply port (81) and the exhaust port (82) and the directions of the openings can improve the ventilation efficiency of the entire indoor space (S).

In addition, when a predetermined threshold value is set for the air age, and a determination is made that the air age has exceeded the threshold value, increasing the blow-out air velocity and the intake air velocity can reduce the air age in the region An where the air age has exceeded the threshold value. Such efficient ventilation can reduce an increase in the risk of infection by pathogenic bacteria and other factors floating in the air in the indoor space (S).

«Other Embodiments»

The environment detection system (1) of the present disclosure may detect either the temperature distribution or the air velocity distribution.

In the environment detection system (1) of the present disclosure, the speaker (10) and the microphone (20) may be separately installed at different locations in the indoor space (S).

In the environment detection system (1) of the present disclosure, the temperature and air velocity in the first region Ap may be used as the blow-out temperature and the intake air velocity, respectively. Alternatively, the temperature and air velocity in the first region Ap may be used as the intake temperature and the blow-out air velocity, respectively.

In the environment detection system (1) of the present disclosure, the determination unit (32) may select whether the air temperature in the first region Ap is used as the intake temperature or as the blow-out temperature, based on the open position of each flap (72). In addition, the determination unit (32) may select whether the air velocity in the first region Ap is defined as the intake air velocity or the blow-out air velocity, based on the open position of the flap (72). For example, when the open position of the flap (72) is the most upward position (horizontal blow-out position), the substantial opening area of the outlet (67) is minimum. In this case, an airflow from the outlet (67) passes through only a small portion of the first region Ap. For this reason, the air velocity in the first region Ap is hardly affected by the airflow. Thus, while the flap (72) is in the horizontal blow-out position, the determination unit (32) determines that the intake temperature is the temperature in the first region Ap and that the intake air velocity is the air velocity in the first region Ap. On the other hand, while the flap (72) is in the most downward position, an airflow from the outlet (67) flows through a large portion of the first region Ap. For this reason, the air velocity in the first region Ap can be assumed to be substantially the same as the flow rate of the airflow from the outlet (67). Thus, while the flap (72) is in the most downward position, the determination unit (32) determines that the blow-out temperature is the temperature in the first region Ap and that the blow-out air velocity is the air velocity in the first region Ap.

In the environment detection system (1) of the present disclosure, the first region Ap is not limited to a region adjacent to the indoor unit (48). The first region Ap merely needs to be a region where the temperature and the air velocity obtained from the acquired information can be assumed to be the temperature and velocity of the air in the first region Ap. For example, the first region Ap may be a region where the temperature detected by the first temperature sensor (54) can be assumed to be the air temperature in the first region Ap.

In the environment detection system (1) of the present disclosure, the number of the speaker(s) (10) and the number of the microphone(s) (20) in the indoor space (S) are not each limited to one, and may be two or more.

In the environment detection system (1) of the present disclosure, the location at which the speaker (10) and the microphone (20) are installed is not limited to the ceiling of the indoor space (S). The speaker (10) and the microphone (20) may be installed on the wall surface or floor surface of the indoor space (S). The speaker (10) and the microphone (20) may be installed in the indoor unit (48).

"Air conditioning" as used herein includes not only "regulation of temperature and humidity" but also "regulation of cleanliness and an airflow." Thus, the environment control device (40) of the present disclosure is not limited to an air conditioner that cools and heats an indoor space, and may be, for example, a ventilator or an air cleaner.

While the embodiments and the variations thereof have been described above, it will be understood that various changes in form and details may be made without departing from the spirit and scope of the claims. The embodiments and the variations thereof may be combined and replaced with each other without deteriorating intended functions of the present disclosure. The expressions of "first," "second," ... described above are used to distinguish the terms to which these expressions are given, and do not limit the number and order of the terms.

INDUSTRIAL APPLICABILITY

As can be seen from the foregoing description, the present disclosure is useful for an environment detection system.

DESCRIPTION OF REFERENCE CHARACTERS

S    Indoor Space (Target Space)
1    Environment Detection System
10   Speaker (Sound Wave Transmitter)
20   Microphone (Sound Wave Receiver)
32   Determination Unit
40   Air Conditioner (Environment Control Device)
44   Indoor Heat Exchanger (Heat Exchanger)
52   Indoor Fan (Fan)
66   Inlet
67   Outlet
72   Flap

**Claims**

1.  An environment detection system, comprising:

a sound wave transmitter (10) configured to transmit a detection sound wave to a target space (S) where an environment control device (40) configured to condition air in a space is installed; and
a sound wave receiver (20) configured to receive the detection sound wave transmitted by the sound wave transmitter (10),
the environment detection system obtaining at least either a temperature distribution or an air velocity distribution in the target space (S), based on measured sound wave data including a length of a sound wave propagation path and a sound wave propagation time, from when the sound wave transmitter (10) transmits the detection sound wave to when the sound wave receiver (20) receives the detection sound wave,
the environment detection system further including:

a determination unit (32) configured to determine at least either a temperature or an air velocity in a first region Ap near the environment control device (40), based on predetermined acquired information acquired from the environment control device (40),

at least either a temperature distribution or an air velocity distribution in a second region Aq of the target space (S) except the first region Ap being obtained based on at least either the temperature or the air velocity in the first region Ap determined by the determination unit (32) and the measured sound wave data.

2.  The environment detection system of claim 1, wherein

    the environment control device (40) is
    an air conditioner (40) having an inlet (66) through which air is drawn from the target space (S) and an outlet (67) through which air is blown into the target space (S),
    the acquired information is an intake temperature that is a temperature of the air drawn through the inlet (66) by the air conditioner (40),
    the determination unit (32) determines that the intake temperature is a temperature in the first region Ap, and
    the temperature distribution in the second region Aq is obtained based on the temperature in the first region Ap determined by the determination unit and the measured sound wave data.

3.  The environment detection system of claim 1, wherein

    the environment control device (40) is
    an air conditioner (40) including:

    an inlet (66) through which air is drawn from the target space (S);
    a heat exchanger (44) configured to regulate a temperature of the air drawn through the inlet (66);
    an outlet (67) through which air that has passed through the heat exchanger (44) is blown into the target space (S);
    a fan (52) configured to send air from the inlet (66) to the outlet (67); and
    a flap (72) configured to regulate a direction of air blown out of the outlet (67), wherein

    the acquired information includes a temperature of the heat exchanger (44), the temperature of the air drawn through the inlet (66), a rotational speed of the fan (52), and an orientation of the flap (72),
    the determination unit (32) calculates a blow-out temperature that is a temperature of the air blown out of the outlet (67) of the air conditioner (40), based on the acquired information, and determines that the blow-out temperature is the temperature in the first region Ap, and
    the temperature distribution in the second region Aq is obtained based on the temperature in the first region Ap determined by the determination unit (32) and the measured sound wave data.

4.  The environment detection system of claim 1, wherein

    the environment control device (40) is
    an air conditioner (40) including:

    an inlet (66) through which air in the target space (S) is drawn;
    an outlet (67) through which air is blown into the target space (S); and
    a fan (52) configured to send air from the inlet (66) to the outlet (67), wherein

    the acquired information includes a rotational speed of the fan (52) and an opening area of the inlet (66),
    the determination unit (32) calculates an intake air velocity that is a velocity of the air drawn into the inlet (66) of the air conditioner (40), based on the acquired information, and determines that the intake air velocity is the air velocity in the first region Ap, and
    the air velocity distribution in the second region Aq is obtained based on the air velocity in the first region Ap determined by the determination unit (32) and the measured sound wave data.

5.  The environment detection system of claim 1, wherein

    the environment control device (40) is
    an air conditioner (40) including:

    an inlet (66) through which air in the target space (S) is drawn;
    an outlet (67) through which air is blown into the target space (S);

a fan (52) configured to send air from the inlet (66) to the outlet (67); and
a flap (72) configured to regulate a direction of air blown out of the outlet (67), wherein

the acquired information includes a rotational speed of the fan (52), an opening area of the inlet (67), and an orientation of the flap (72),
the determination unit (32) calculates a blow-out air velocity that is a velocity of the air blown out of the outlet (67) of the air conditioner (40), based on the acquired information, and determines that the blow-out air velocity is the air velocity in the first region Ap, and
the air velocity distribution in the second region Aq is obtained based on the air velocity in the first region Ap determined by the determination unit (32) and the measured sound wave data.

6. The environment detection system of any one of claims 1 to 5, wherein

the second region Aq is further divided into a plurality of regions, and
the determination unit (32) obtains the air velocity distribution in the second region Aq, where an air velocity in each of some of the regions touching a wall surface, a floor surface, and a ceiling surface of the target space (S) is zero.

7. The environment detection system of any one of claims 1 to 6, further comprising:
a calculation unit (35) configured to obtain an air age distribution in the target space (S), based on the air velocity distribution in the second region Aq.

# FIG.1

# FIG.2

FIG.3

# FIG.4

# FIG.5

## FIG.6

100

**CONTROL DEVICE**

42 — COMPRESSOR

46 — EXPANSION VALVE

45 — FOUR-WAY SWITCHING VALVE

52 — OUTDOOR FAN

OUTPUT UNIT — 101

INPUT UNIT — 102

COMMUNICATION UNIT — 103

INDOOR FAN — 52

AIRFLOW DIRECTION REGULATOR — 73

FIRST TEMPERATURE SENSOR — 54

30 — CONTROLLER

# FIG.7

```
                              ┌─────────────┐ ┌─ 20
                              │ MICROPHONE  │╱
                              └─────────────┘
                                     │
                                     │            ┌─ 1
                                     ▼          ╱
                    ┌────────────────────────────────┐
                    │   ┌────────────────┐ ┌─ 31     │
                    │   │    RECEIVER     │╱          │
                    │   └────────────────┘            │
                    │   ┌────────────────┐ ┌─ 32     │
                    │   │  DETERMINATION │╱          │
                    │   │      UNIT      │            │
                    │   └────────────────┘           │┌─ 30
┌─ 100             ┌──────────────┐│   ┌────────────────┐ ┌─ 33   │╱
│╱                 │CONTROL DEVICE│────│  STORAGE UNIT  │╱        │
└──────────────────└──────────────┘│   └────────────────┘        │
                    │   ┌────────────────┐ ┌─ 34     │
                    │   │  SETTING UNIT  │╱          │
                    │   └────────────────┘           │
                    └────────────────────────────────┘
                                     │
                                     ▼
                              ┌─────────────┐ ┌─ 10
                              │   SPEAKER   │╱
                              └─────────────┘
```

# FIG.8

# FIG.9

TOP

LEFT ⟵⟶ RIGHT

BOTTOM

# FIG.10

```
          ( START )
              │
              ▼
┌─────────────────────────────┐
│   CALCULATE SOUND WAVE      │ ── ST1
│  PROPAGATION PATH LENGTH    │
└─────────────────────────────┘
              │
              ▼
┌─────────────────────────────┐
│   CALCULATE SOUND WAVE      │ ── ST2
│    PROPAGATION TIME         │
└─────────────────────────────┘
              │
              ▼
┌─────────────────────────────┐
│ CALCULATE TEMPERATURE AND AIR│ ── ST3
│  VELOCITY IN EACH REGION OF  │
│       SECOND REGION          │
└─────────────────────────────┘
              │
              ▼
┌─────────────────────────────┐
│   CALCULATE TEMPERATURE     │ ── ST4
│  DISTRIBUTION AND VELOCITY  │
│ DISTRIBUTION IN INDOOR SPACE│
└─────────────────────────────┘
              │
              ▼
          ( END )
```

# FIG.11

```
┌─────────────────────────────────────┐
│ CALCULATE TEMPERATURE AND AIR VELOCITY │
│    IN EACH REGION OF SECOND REGION     │
└─────────────────────────────────────┘
                  │
                  ▼
┌─────────────────────────────┐
│   DETERMINE AIR TEMPERATURE  │  ST11
│        IN FIRST REGION       │
└─────────────────────────────┘
                  │
                  ▼
┌─────────────────────────────┐
│  CALCULATE INTAKE AIR VELOCITY │  ST12
└─────────────────────────────┘
                  │
                  ▼
┌─────────────────────────────┐
│     DETERMINE AIR VELOCITY   │  ST13
│        IN FIRST REGION       │
└─────────────────────────────┘
                  │
                  ▼
┌─────────────────────────────────────┐
│ CALCULATE TEMPERATURE AND AIR VELOCITY │  ST14
│    IN EACH REGION OF SECOND REGION     │
└─────────────────────────────────────┘
                  │
                  ▼
              ( RETURN )
```

# FIG.12

# FIG.13

```
┌─────────────────────────────────────┐
│ CALCULATE TEMPERATURE AND AIR VELOCITY │
│   IN EACH REGION OF SECOND REGION      │
└─────────────────────────────────────┘
                    │
                    ▼
┌─────────────────────────────────────┐
│   CALCULATE BLOW-OUT TEMPERATURE      │──ST21
└─────────────────────────────────────┘
                    │
                    ▼
┌─────────────────────────────────────┐
│     DETERMINE AIR TEMPERATURE         │──ST22
│         IN FIRST REGION               │
└─────────────────────────────────────┘
                    │
                    ▼
┌─────────────────────────────────────┐
│   CALCULATE BLOW-OUT AIR VELOCITY     │──ST23
└─────────────────────────────────────┘
                    │
                    ▼
┌─────────────────────────────────────┐
│       DETERMINE AIR VELOCITY          │──ST24
│         IN FIRST REGION               │
└─────────────────────────────────────┘
                    │
                    ▼
┌─────────────────────────────────────┐
│ CALCULATE TEMPERATURE AND AIR VELOCITY │──ST25
│   IN EACH REGION OF SECOND REGION      │
└─────────────────────────────────────┘
                    │
                    ▼
                ( RETURN )
```

# FIG.14

MICROPHONE — 20

1

RECEIVER — 31

DETERMINATION UNIT — 32

CONTROL DEVICE — 100

STORAGE UNIT — 33

30

SETTING UNIT — 34

CALCULATION UNIT — 35

ESTIMATION UNIT — 36

SPEAKER — 10

## FIG.15

## FIG.16

**INTERNATIONAL SEARCH REPORT**

| | International application No. |
| --- | --- |
| | PCT/JP2021/017020 |

**A. CLASSIFICATION OF SUBJECT MATTER**
F24F 11/88(2018.01)i; F24F 110/10(2018.01)n; F24F 110/30(2018.01)n; G01K 11/24(2006.01)i
FI: G01K11/24; F24F11/88; F24F110:10; F24F110:30
According to International Patent Classification (IPC) or to both national classification and IPC

**B. FIELDS SEARCHED**

Minimum documentation searched (classification system followed by classification symbols)
G01K1/00-19/00; F24F11/00-11/89; F24F110/10; F24F110/30

Documentation searched other than minimum documentation to the extent that such documents are included in the fields searched
Published examined utility model applications of Japan     1922-1996
Published unexamined utility model applications of Japan   1971-2021
Registered utility model specifications of Japan           1996-2021
Published registered utility model applications of Japan   1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2002-54999 A (TAKENAKA CORPORATION) 20 February 2002 (2002-02-20) paragraphs [0006]-[0125], fig. 1-10 | 1-7 |
| A | JP 1-314931 A (MITSUBISHI HEAVY INDUSTRIES, LTD.) 20 December 1989 (1989-12-20) page 1, lower right column, lines 1-13, fig. 3 | 1-7 |
| A | US 2020/0072680 A1 (NXP B.V.) 05 March 2020 (2020-03-05) paragraphs [0052]-[0113], fig. 1-9 | 1-7 |
| A | JP 2019-190694 A (MITSUBISHI HEAVY INDUSTRIES THERMAL SYSTEMS, LTD.) 31 October 2019 (2019-10-31) paragraphs [0006]-[0050], fig. 1-7 | 1-7 |
| A | US 6439468 B1 (DELPHI TECHNOLOGIES, INC.) 27 August 2002 (2002-08-27) column 2, line 34 to column 7, line 44, fig. 1-2 | 1-7 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 29 June 2021 (29.06.2021) | 13 July 2021 (13.07.2021) |

| Name and mailing address of the ISA/ Japan Patent Office 3-4-3, Kasumigaseki, Chiyoda-ku, Tokyo 100-8915, Japan | Authorized officer |
| --- | --- |
| | Telephone No. |

Form PCT/ISA/210 (second sheet) (January 2015)

INTERNATIONAL SEARCH REPORT

Information on patent family members

| International application no. |
| --- |
| PCT/JP2021/017020 |

| Patent Documents referred in the Report | Publication Date | Patent Family | Publication Date |
| --- | --- | --- | --- |
| JP 2002-54999 A | 20 Feb. 2002 | (Family: none) | |
| JP 1-314931 A | 20 Dec. 1989 | (Family: none) | |
| US 2020/0072680 A1 | 05 Mar. 2020 | EP 3617678 A1 CN 110873612 A | |
| JP 2019-190694 A | 31 Oct. 2019 | WO 2019/203347 A1 | |
| US 6439468 B1 | 27 Aug. 2002 | (Family: none) | |

Form PCT/ISA/210 (patent family annex) (January 2015)

**EP 4 119 862 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11173925 A